# EUROPÄISCHE PATENTSCHRIFT

(11) **EP 4 089 462 B1**
(45) Veröffentlichungstag und Bekanntmachung des Hinweises auf die Patenterteilung: **29.01.2025**
(21) Anmeldenummer: 22173042.7
(22) Anmeldetag: 12.05.2022
(51) Int. Cl.: G02B 23/16, G02B 27/00, F41G 1/38

(54) **AUFSATZVORRICHTUNG FÜR EIN OKULAR ODER OBJEKTIV EINER FERNOPTISCHEN VORRICHTUNG**
ATTACHMENT FOR AN EYEPIECE OR LENS OF A REMOTE OPTICAL DEVICE
DISPOSITIF DE FIXATION POUR UN OCULAIRE OU UNE LENTILLE OBJECTIF D'UN DISPOSITIF OPTIQUE D'OBSERVATION

(30) Priorität: 14.05.2021 AT 503752021
(43) Veröffentlichungstag der Anmeldung: 16.11.2022
(73) Patentinhaber: Swarovski-Optik AG & Co KG., 6067 Absam (AT)
(72) Erfinder: ZANGERL, Alois, 6067 Absam (AT); KUHN, Martin, 6671 Rieden (AT); SOCHER, Michael, 6072 Lans (AT); GIMPL, Philipp, 6067 Absam (AT)
(74) Vertreter: Burger, Hannes

(56) Entgegenhaltungen:
- DE-U1- 29 616 396
- FR-A1- 2 296 863
- US-A1- 2018 100 722

## Beschreibung

Die Erfindung betrifft eine Aufsatzvorrichtung für zumindest ein Objektiv und/oder zumindest ein Okular einer fernoptischen Vorrichtung, insbesondere in Form eines Zielfernrohrs, eines monokularen oder binokularen Fernrohrs.

Weiters betrifft die Erfindung eine fernoptische Vorrichtung, insbesondere in Form eines Zielfernrohrs, eines monokularen oder binokularen Fernrohrs.

Abhängig von den Umgebungsbedingungen, bei welchen die fernoptische Vorrichtung von einem Benutzer verwendet wird, beispielsweise bei niedrigen Außentemperaturen, kann es vorkommen, dass die fernoptische Vorrichtung durch den Atem des Nutzers oder durch erhöhte Luftfeuchtigkeit beschlägt und ein bestimmungsgemäßer Durchblick durch die fernoptische Vorrichtung beeinträchtig oder verhindert wird. Insbesondere kann es zu einem Beschlagen einer Okularlinse der fernoptischen Vorrichtung durch an der Oberfläche der Linse kondensierende Atemluft kommen. Eine ähnliche Situation kann jedoch auch feldseitig an einer Objektivlinse auftreten. Handelt es sich bei fernoptischen Vorrichtung beispielsweise um ein Zielfernrohr, so kann der Fall auftreten, dass durch das Beschlagen ein Zielen nicht mehr möglich ist.

In dem Dokument DE 296 16 996 Ul wird eine Vorrichtung zum Erwärmen von Okularlinsen optischer Geräte beschrieben. Diese umfasst eine Schutzkappe mit einer UV-Strahlungsquelle an deren Innenseite. Wenn die Schutzkappe über die Augenmuschel bzw. das Okular gestülpt ist, wird durch von der Strahlungsquelle abgegebene Lichtenergie das Linsenmaterial erwärmt. Auf diese Weise soll ein Beschlagen der Okular-Linse mit Luftfeuchtigkeit verhindert werden. Unmittelbar vor der Benutzung des optischen Geräts wird die Schutzkappe abgestreift.

Das Dokument US 2018/100722 Al betrifft eine Vorrichtung zum Abdecken der Linsen eines Teleskops bzw. eines Zielfernrohrs. Diese besteht aus zwei mit elastischen Bändern bzw. Kordeln verbundenen Schutzkappen, von denen jeweils eine über das okularseitige Ende und die andere über das objektivseitige Ende gestülpt wird. Unter der Wirkung der gespannten Bänder werden die Schutzkappen an den jeweiligen Enden in Position gehalten. Jede der Schutzkappen umfasst eine in einer Manschette gehaltene und austauschbare Scheibe aus transparentem Material bzw. eine austauschbare Linse. Durch die dicht anliegenden Schutzkappen kann das Eindringen von Staub oder Feuchtigkeit verhindert werden.

Dokument FR 2 296 669 A1 beschreibt eine Schutzkappe für Fernrohre oder Zielfernrohre. Diese besteht aus einem Befestigungsring, der am Gehäuse des Fernrohrs angebracht werden kann, einer Verschlusskappe und einem Federverbindungselement. Die Verschlusskappe kann das Ende des Fernrohrs - das Okular oder das Objektiv - umschließen bzw. abdecken. Die Verschlusskappe ist dabei durch das Federverbindungselement derart mit dem Befestigungsring verbunden, dass die Abdeckung - so nicht am Ende des Fernrohrs fixiert - stets aus dem Sichtfeld bzw. hinter der Öffnungsebene des Fernrohrs gehalten wird.

Es ist daher eine Aufgabe der vorliegenden Erfindung, die oben genannten Nachteile des Stands der Technik zu überwinden und ein einen Durchblick durch die fernoptische Vorrichtung behinderndes Beschlagen der fernoptischen Vorrichtung zu verhindern.

Diese Aufgabe wird mit einer Aufsatzvorrichtung der eingangs genannten Art erfindungsgemäß dadurch gelöst, dass die Aufsatzvorrichtung zumindest ein, zumindest in einem sichtbaren Spektralbereich durchsichtiges Fenster sowie zumindest eine elektrische Heizvorrichtung für das Fenster aufweist.

Unter einem Fenster wird in dem vorliegenden Zusammenhang ein Bereich in der Aufsatzvorrichtung verstanden, welcher zumindest teilweise transparent im sichtbaren Spektralbereich ist.

Oberflächen des Fensters können beispielsweise flach, gewölbt oder als Mischung von flachen und gewölbten Bereichen ausgebildet sein. Eine flaches Fenster kann als Scheibe ausgebildet sein bzw. als Scheibe bezeichnet werden. Ein gewölbtes Fenster kann als Linse ausgebildet sein bzw. als Linse bezeichnet werden.

Mit der erfindungsgemäßen Lösung lässt sich auf einfache Weise durch Beheizen des Fensters gewährleisten, dass ein Beschlagen einer gegenüber der Umgebung optisch wirksamen Außenseite der fernoptischen Vorrichtung unterbunden wird. Weiters wird durch die Anordnung der Aufsatzvorrichtung das Okular bzw. das Objektiv abgeschirmt und gegen ein Beschlagen geschützt. Zudem ermöglicht die erfindungsgemäße Lösung ein einfaches Nachrüsten bestehender fernoptischer Vorrichtungen. Dies hat den Vorteil, dass das optische System der fernoptischen Einrichtung durch Montieren der Aufsatzvorrichtung unverändert bleibt. Ein weiterer Vorteil kann darin gesehen werden, dass nach Demontage der Aufsatzvorrichtung das fernoptische Gerät wieder in seinen Ausgangszustand, den es vor der Montage hatte, gebracht werden kann.

Als besonders vorteilhaft hat sich erwiesen, dass die Heizvorrichtung zumindest eine auf einer Oberfläche des zumindest einen Fensters angebrachte elektrisch leitende Heizschicht aufweist. Diese Variante ermöglicht eine direkte Beheizung unmittelbar an den Stellen des Fensters, an welchen eine erhöhte Temperatur erforderlich ist, um ein Beschlagen des Fensters zu verhindern. Durch diese Variante der Erfindung lässt sich ein sehr hoher Wirkungsgrad erzielen.

Bei einer bevorzugten Variante der Erfindung weist die Aufsatzvorrichtung zumindest eine Heizungssteuerung auf, die dazu eingerichtet ist, die Heizleistung, insbesondere einen Stromfluss durch die zumindest eine Heizschicht zu steuern. Diese Variante der Erfindung ermöglicht eine gezielte Einstellung der Temperatur des Fensters.

Weiters kann die zumindest eine Heizungssteuerung zumindest einen Prozessor und/oder zumindest einen Pulsweitenmodulator und/oder zumindest einen Pulsdauermodulator umfasst.

Diese Variante der Erfindung erlaubt es, einen gepulsten Stromfluss durch die Heizschicht zu erzeugen und die Heizleistung gezielt einzustellen. Dies hat den Vorteil, dass die Heizleistung angepasst und nachreguliert werden kann. Als Prozessor ist jedes elektronische Bauteil zu sehen, welches programmiert werden und Daten auswerten kann, wie z.B. ein FPGA (Field Programable Gate Array), ein ASIC, ein Mikrocontroller, ein Mikroprozessor oder ein DigitalSignal-Prozessor DSP, etc.

Um einen Durchblick durch einen Sichtkanal der fernoptischen Vorrichtung so wenig wie möglich zu beinträchtigen, hat es sich als besonders vorteilhaft herausgestellt, dass das Fenster mit der zumindest einen elektrisch leitenden Heizschicht im sichtbaren Spektralbereich einen Transmissionsgrad von über 80%, insbesondere von über 90%, aufweist.

Eine räumlich gezielte Erwärmung des Fensters lässt sich dadurch erzielen, dass eine Breite und/oder eine Schichtdicke der zumindest einen elektrisch leitenden Heizschicht variiert. An den Stellen, an denen die Heizschicht schmäler und/oder dünner wird, erhöht sich der lokal Widerstand der Heizschicht und die Heizschicht wird an diesen Stellen, wenn ein Strom fließt, stärker erwärmt als an Stellen, die im Verhältnis dazu breiter oder dicker sind. Dies ist besonders dann von Vorteil, wenn sich diese Bereiche, welche stärker erwärmt werden, im Bereich der Verlängerung der optischen Achse der fernoptischen Vorrichtung befinden. Damit wird gewährleistet, dass die fernoptische Vorrichtung im Beschlagsfall zumindest teilweise sehr rasch wieder einsatzfähig ist.

Darüber hinaus kann es auch vorgesehen sein, dass die elektrisch leitende Heizschicht, insbesondere mit einer konstanten Schichtdicke, auf zumindest einer Oberfläche des Fensters aufgebracht ist und zumindest 20°, insbesondere zumindest 30%, bevorzugt zumindest 60%, besonders bevorzugt zumindest 85 %, beispielsweise 100%, dieser Oberfläche bedeckt.

Gemäß einer vorteilhaften Weiterbildung der Erfindung kann es vorgesehen sein, dass die elektrisch leitende Heizschicht über zumindest ein flexibles Flachband mit zumindest einer Leiterbahn und/oder mit einem elektrisch leitendem Material mit einer Versorgungsschaltung verbunden ist. Diese Variante der Erfindung ermöglicht einen sehr guten Schutz der elektrischen Leitungen zur Kontaktierung der Heizschicht gegen Feuchtigkeit und mechanische Beschädigungen, beispielsweise Knickungen oder Brüche, gleichzeitig wird auch der Zusammenbau der Aufsatzvorrichtung wesentlich vereinfacht und ein sehr flacher und platzsparender Aufbau gewährleistet.

Gemäß einer bevorzugten Weiterbildung kann das flexible Flachband zumindest zwei Kontaktierungsstellen zur elektrischen Kontaktierung der elektrischen Heizschicht aufweisen.

Darüber hinaus ist es günstig, wenn das flexible Flachband einen schleifenförmigen, im Bereich des Fensters ein einen freien Blick zumindest auf einen zentralen Abschnitt des Fensters ermöglichendes Auge bildenden Abschnitt aufweist, wobei die Kontaktierungsstellen an dem schleifenförmigen Abschnitt angeordnet sind.

Weiters kann es vorgesehen sein, dass sich an den schleifenförmigen Abschnitt des flexiblen Flachbandes zumindest ein streifenförmiger Abschnitt anschließt, der elektrisch, insbesondere über einen ZIF-Kontakt, mit der Versorgungsschaltung verbunden ist.

Bei einer Variante der Erfindung kann das zumindest eine Fenster eine plane Grundfläche und eine plane Deckfläche aufweisen, wobei die Grundfläche und die Deckfläche bevorzugt planparallel zueinander ausgebildet sind. Vorteilhaft bei dieser Variante ist, dass sich besonders einfach erzielen lässt, dass sich das Fenster weitgehendst optisch neutral verhält und durch die Aufsatzvorrichtung die Gesamtbrennweite der fernoptischen Vorrichtung unbeeinflusst bleibt, sodass die Gesamtbrennweite der fernoptischen Vorrichtung mit Aufsatzvorrichtung der Gesamtbrennweite derselben fernoptischen Vorrichtung ohne Aufsatzvorrichtung entspricht.

Um einen von Reflexionen ungestörten Durchblick zu ermöglichen und Transmissionsverluste zu minimieren, kann das Fenster zumindest eine Antireflexionsbeschichtung aufweisen, wobei das Fenster bevorzugt beidseitig mit der Antireflexionsbeschichtung versehen und somit entspiegelt ist.

Eine besonders einfache Montage und Demontage der Aufsatzvorrichtung an einer fernoptischen Vorrichtung lässt sich dadurch erzielen, dass sie als Aufsteckkappe für das zumindest eine Okular und/oder zumindest eine Objektiv der fernoptischen Vorrichtung ausgebildet ist.

Eine Variante, die auch einen sehr guten Schutz eines von dem Fenster abgedeckten Bereichs gegen Umwelteinflüsse gewährleistet, zeichnet sich dadurch aus, dass die Aufsatzvorrichtung ein Gehäuse mit zumindest einem rohrförmig ausgebildeten Abschnitt aufweist, wobei das Fenster in dem rohrförmigen Abschnitt aufgenommen ist und diesen auf einer Seite abschließt, wobei ein Durchmesser des Fensters bevorzugterweise größer als eine Länge des rohrförmigen Abschnitts ist.

Der Schutz gegen Umwelteinflüsse lässt sich dadurch weiter verbessern, dass die Aufsatzvorrichtung zumindest eine zumindest einen Rand des Fensters thermisch und/oder gegenüber dem Eindringen von Feuchtigkeit oder Fremdkörpern isolierende Dichtung aufweist.

Die Montage und Demontage der Aufsatzvorrichtung an einem Zielfernrohr wird dadurch weiter erleichtert, dass der rohrförmige Abschnitt zumindest eine Klemmvorrichtung zur Befestigung an dem zumindest einen Okular oder zumindest einen Objektiv aufweist.

Zudem kann es vorgesehen sein, dass die Aufsatzvorrichtung zumindest ein mit zumindest einer Abdeckung verschließbares Aufnahmefach für einen als Spannungsquelle dienenden elektrischen Energiespeicher, insbesondere für zumindest eine Batterie oder für zumindest einen Akkumulator, aufweist.

Eine Variante der Erfindung, die bei Montage der Aufsatzvorrichtung auf eine fernoptische Vorrichtung eine optimale Ausnutzung des zur Verfügung stehenden Platzes ermöglicht und eine Handhabung der fernoptischen Vorrichtung nicht beeinträchtigt, sieht vor, dass das Aufnahmefach für den elektrischen Energiespeicher mit dem rohrförmigen Abschnitt, insbesondere über einen Steg, verbunden ist.

Besonders bevorzugt ist es hierbei, dass eine Längserstreckung des rohrförmigen Abschnittes und eine Längserstreckung des Aufnahmefaches parallel zueinander verlaufen.

Um einen Schutz des Fensters vor Beschädigungen, wie beispielsweise Zerkratzen oder Abtragen einer Beschichtung, wie beispielsweise der Heizschicht oder der Antireflexionsbeschichtung, zu gewährleisten, kann die Aufsatzvorrichtung zumindest eine verschwenkbar gelagerte Abdeckung für das Fenster aufweisen.

Eine besonders einfaches, komfortables und benutzerfreundliches Ein- und Ausschalten der Heizvorrichtung lässt sich dadurch erzielen, dass die Aufsatzvorrichtung dazu eingerichtet ist, bei einem Verschwenken der Abdeckung aus einer das Fenster bedeckenden Position, in eine das Fenster freigebende Position, die Heizungsvorrichtung zu aktivieren und das Fenster zu erwärmen und/oder bei einem Schließen der Abdeckung die Heizvorrichtung zu deaktivieren.

Alternativ oder zusätzlich kann die Heizvorrichtung aber auch dazu eingerichtet sein, in Abhängigkeit von zumindest einem von zumindest einem Neigungssensors und/oder zumindest einem Näherungssensor und/oder zumindest einem Beschlagsensor erzeugten Signal die Heizvorrichtung zu aktivieren und/oder zu deaktivieren.

Als besonders vorteilhaft hat sich herausgestellt, dass die elektrisch leitende Heizschicht aus zumindest einer dünnen und transparenten Metallschicht und/oder einem transparenten, elektrisch leitfähigen Oxid, beispielsweise Indiumzinnoxid (ITO), antimondotiertes Zinnoxid (ATO), fluordotiertes Zinnoxid (FTO), aluminiumdotiertes Zinkoxid (AZO) hergestellt ist oder zumindest eines der genannten Materialien umfasst.

Darüber hinaus kann das Fenster aus zumindest einem Kunststoff und/oder zumindest einem Glas und/oder zumindest einem keramischen und/oder mineralischen und/oder kristallinen Material hergestellt sein oder zumindest eines der genannten Materialien umfassen.

Die oben genannte Aufgabe lässt sich auch mit einer fernoptischen Vorrichtung der eingangs genannten Art erfindungsgemäß dadurch lösen, dass die fernoptische Vorrichtung zumindest eine Aufsatzvorrichtung nach einem der Ansprüche 1 bis 25 aufweist, wobei die Aufsatzvorrichtung okularseitig an einem Gehäuse der fernoptischen Vorrichtung oder objektivseitig an dem Gehäuse der fernoptischen Vorrichtung angeordnet ist und das Okular oder das Objektiv gegenüber der Umgebung durch die Aufsatzvorrichtung abgedeckt ist.

Besonders bevorzugt ist, dass bei einer okularseitigen Anordnung der Aufsatzvorrichtung an dem Gehäuse der fernoptischen Vorrichtung ein Abstand zwischen dem Fenster und einem Okular der fernoptischen Vorrichtung max. 10 mm, insbesondere max. 5 mm, beträgt.

Besonders vorteilhaft ist dabei, wenn ein Abstand zwischen einer dem Okular zugewandten Seite des Fensters der Aufsatzvorrichtung und einer dem Fenster zugewandten Außenseite einer das Okular abschließenden Linse der fernoptischen Vorrichtung höchstens 20 mm, insbesondere höchstens 10 mm, beträgt. Dadurch wird gewährleistet, dass bei einer Montage der Aufsatzvorrichtung auf das Okular eines Zielfernrohr der zur Vermeidung von Verletzungen bei einem Rückstoß bei einer Schussabgabe einer Feuerwaffe, auf welcher das Zielfernrohr befestigt ist, notwendige Sicherheitsabstand zwischen dem Kopf des Schützens und dem Zielfernrohr mit der Aufsatzvorrichtung nicht wesentlich verkleinert wird.

Dies kann gewährleistet werden, wenn eine dem Benutzer zugewandte äußerste Fläche oder Kante des rohrförmig ausgebildeten Abschnitts der Aufsatzvorrichtung bei der Montage auf dem Okular nicht mehr als 25 mm, insbesondere nicht mehr als 15 mm, über eine äußerste dem Benutzer zugewandte Fläche oder Kante der fernoptischen Vorrichtung hervorsteht.

Zum besseren Verständnis der Erfindung wird diese anhand der nachfolgenden Figuren näher erläutert.

Es zeigen jeweils in stark vereinfachter, schematischer Darstellung:
- Fig. 1: ein Blockschaltbild einer erfindungsgemäßen Aufsatzvorrichtung;
- Fig. 2: ein flexibles Flachband zur elektrischen Kontaktierung einer auf einer Scheibe angebrachten Heizschicht der Aufsatzvorrichtung aus Fig. 1;
- Fig. 3: eine Draufsicht auf eine Scheibe der Aufsatzvorrichtung aus Fig. 1 im näheren Detail;
- Fig. 4: eine perspektivische Ansicht einer erfindungsgemäßen Aufsatzvorrichtung;
- Fig. 5: eine Explosionsdarstellung der Aufsatzvorrichtung aus Fig. 4;
- Fig. 6: eine Draufsicht auf eine Variante einer Scheibe der Aufsatzvorrichtung aus Fig. 1;
- Fig. 7: eine Draufsicht auf eine weitere Variante einer Scheibe der Aufsatzvorrichtung aus Fig. 1;
- Fig. 8: eine Draufsicht auf eine weitere Variante einer Scheibe der Aufsatzvorrichtung aus Fig. 1;
- Fig. 9: eine perspektivische Ansicht der fernoptische Vorrichtung mit der Aufsatzvorrichtung aus Fig.1 und
- Fig. 10: Längsschnitt durch den Bereich rund am das Okular der fernoptischen Vorrichtung aus Fig. 9;
- Fig. 11: Schnitt durch den das Okular der fernoptischen Vorrichtung aufnehmenden Bereich der Aufsatzvorrichtung mit geöffnetem Schutzdeckel.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

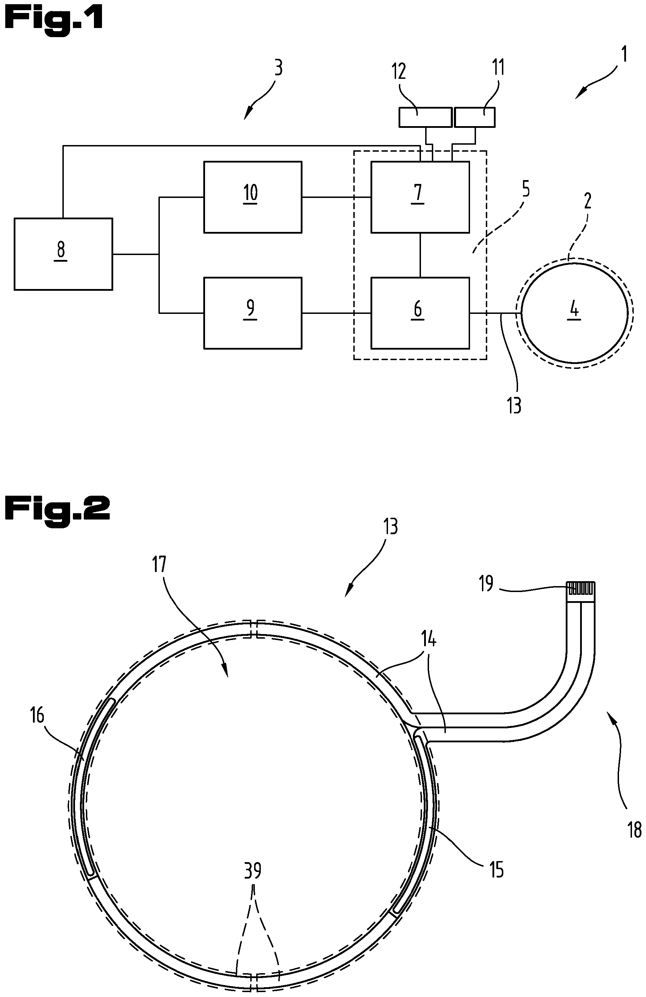

Gemäß Fig. 1 weist eine erfindungsgemäße Aufsatzvorrichtung 1 für eine fernoptische Vorrichtung, wie ein Zielfernrohr, ein monokulares oder binokulares Fernrohr oder Teleskop, ein in einem sichtbaren Spektralbereich durchsichtiges Fenster 2 sowie eine elektrische Heizvorrichtung 3 für das Fenster 2 auf. Die Aufsatzvorrichtung 1 kann auf ein Okular oder ein Objektiv einer fernoptischen Vorrichtung aufgesetzt und dort fixiert werden.

Das Fenster 2 kann aus Kunststoff und/oder Glas und/oder einem keramischen und/oder mineralischen und/oder kristallinen Material hergestellt ist oder zumindest eines der genannten Materialien umfassen. Das Fenster 2 kann beispielsweise aus einem Schichtverbund von Schichten unterschiedlicher Materialien oder auch monolithisch aus einem Konglomerat unterschiedlicher Materialien oder auch nur aus einem einzigen Material hergestellt sein.

Die Heizvorrichtung 3 weist eine auf einer Oberfläche des zumindest einen Fensters 2 angebrachte elektrisch leitende Heizschicht 4 auf. Das Fenster mit der zumindest einen elektrisch leitenden Heizschicht 4 kann im sichtbaren Spektralbereich einen Transmissionsgrad von über 80%, insbesondere von über 90%, aufweisen. Bevorzugt ist die elektrisch leitende Heizschicht 4 eine Schicht aus einem oder mehreren transparenten, elektrisch leitfähigen Oxiden. Derartige Materialien werden auch als TCO abgekürzt ("transparent conducting oxides"). Die Schicht kann beispielsweise aus Indiumzinnoxid (ITO), antimondotiertes Zinnoxid (ATO), fluordotiertes Zinnoxid (FTO), aluminiumdotiertes Zinkoxid (AZO) hergestellt sein. Weiters kann die Schicht 2 auch als dünne Metallschicht, beispielsweise mit einer Schichtdicke von weniger als 50 nm, ausgebildet sein. Als Material für die Metallschicht kann grundsätzlich jedes Metall verwendet werden, insbesondere Aluminium, Silber oder Kupfer.

Die Heizschicht 4 kann eine konstanten Schichtdicke aufweisen. Die Schichtdicke der Heizschicht 4 kann aber auch variieren. Die Schichtdicke der Heizschicht 4 beträgt bevorzugt zwischen 5 nm - 250 nm, der Flächenwiderstand 2 bis 10 Ohm, insbesondere 4 bis 6 Ohm, der sich daraus ergebende Gesamtwiderstand der Heizschicht 5 bis 25 Ohm, insbesondere 10 bis 20 Ohm.

Die Heizschicht 2 ist auf einer Oberfläche des Fensters 2 aufgebracht. Diese Oberfläche kann beispielsweise eine Innen- oder eine Außenseite des Fensters 2 bilden, wobei das Aufbringen auf der Außenseite des Fensters besonders bevorzugt ist. Die Innenseite des Fensters 2 ist jene Seite, die in einem auf eine fernoptische Vorrichtung montierten Zustand der Aufsatzvorrichtung 1 der fernoptischen Vorrichtung zugewandt ist. Die Außenseite des Fensters 2 ist jene Seite, die dem Benutzer zugewandt ist. Bevorzugt bedeckt die Heizschicht 2 mindestens 20%, insbesondere zumindest 30%, bevorzugt zumindest 60%, besonders bevorzugt zumindest 85 %, beispielsweise 100%, der Oberfläche des Fensters, auf der die Heizschicht 2 aufgebracht ist.

Bei Einschalten der Heizvorrichtung 3 fließt Strom durch die Heizschicht 4, wodurch sich die Heizschicht 4 aufgrund ihres elektrischen Widerstands erwärmt und in weiterer Folge auch die Temperatur des Fenster 2 erhöht. Durch die Erwärmung wird die Temperatur an der Oberfläche des Fensters 2 zumindest soweit erhöht, sodass sie mindestens der aus Lufttemperatur und Luftfeuchte umgebungsbedingten Taupunkttemperatur entspricht oder diese übersteigt, wodurch ein Beschlagen des Fensters 2 vermieden werden kann.

Die Heizvorrichtung 3 kann eine Heizungssteuerung 5 aufweisen, die dazu eingerichtet ist, die Heizleistung, insbesondere einen Stromfluss durch die zumindest eine Heizschicht 4 zu steuern. Die Heizleistung lässt sich durch Veränderung des durch die Heizschicht 4 fließenden Stroms einstellen.

Die Heizungssteuerung 5 kann einen Pulsweitenmodulator 6 und/oder einen Prozessor 7 umfassen. Wie bereits oben erwähnt, ist als Prozessor jedes elektronische Bauteil zu verstehen, welches programmiert werden und Daten auswerten kann, wie z.B. ein FPGA (Field Programmable Gate Array), ein ASIC, ein Mikrocontroller, ein Mikroprozessor oder ein DigitalSignal-Prozessor DSP, etc.

Die Heizvorrichtung 3 wird von einer Spannungsquelle 8 gespeist, beispielsweise einer Batterie oder einem Akkumulator.

Der Prozessor 7 kann gleichzeitig auch den Zustand der Spannungsquelle 8, wie beispielsweise deren Spannung und Temperatur überwachen und daraus den Ladezustand ableiten. Der Ladezustand des Spannungsquelle 8 kann beispielsweise optisch angezeigt werden.

Die Heizleistung kann von der Heizungssteuerung 5 je nach Bedarf beispielsweise mittels des Pulsweitenmodulators 7 durch Pulsweitenmodulation, variiert werden. Natürlich ist auch ein kontinuierlicher nicht gepulster Betrieb, bei dem ein nicht gepulster und geregelter Strom durch die Heizschicht fließt, möglich. Es ist ebenfalls möglich, die Heizschicht 4 mit einer kontinuierlichen Spannung zu betreiben, die Höhe der Spannung aber zu variieren (Spannungsregelung) und somit die Heizleistung zu regeln. Dies kann in einfacher Weise durch einen variablen DC/DC Konverter oder sonstiger geregelter Spannungsquelle erfolgen.

Es hat sich als vorteilhaft herausgestellt, wenn die Heizschicht 4 bei Aktivierung für eine erste Zeitspanne mit einer höheren ersten Heizleistung und nach Ablauf dieser Zeitspanne mit einer reduzierten und kontinuierlichen zweiten Heizleistung weiter betrieben wird. Dies hat den Effekt, dass mit der erhöhten ersten Heizleistung ein vorhandener Beschlag rasch aufgelöst und mit der kontinuierlichen und reduzierten zweiten Heizleistung ein neuerlicher Beschlag verhindert werden kann.

Als Grenzfall des Betriebes der Heizschicht 4 im gepulsten Betrieb kann die Anwendung von sehr kurzen Pulsen angesehen werden. Dabei wird in sehr kurzen Zeitintervallen, typischerweise im Millisekundenbereich, die Heizschicht mit gegenüber dem kontinuierlichen Betrieb deutlich erhöhter Leistung betrieben, was zu einer noch rascheren Erwärmung der Oberfläche führt. Je nach Tastverhältnis sind Spitzenleistungen denkbar, welche um den Faktor 10 - 500 höher als die Leistung im kontinuierlichen Betrieb sind. Die mittlere Leistung kann dabei gegenüber dem kontinuierlichen Betrieb unverändert bleiben.

Aus der Spannung der Spannungsquelle 8 können, beispielsweise mittels DC/DC Konverter 9, 10 (Spannungswandler) zwei stabilisierte Spannungen erzeugt werden. So kann beispielsweise eine Spannung (z.B. 2,5 V) für den Betrieb des Prozessors 7 und eine zweite Spannung (z.B. 5V) zur Speisung der Heizschicht 4 erzeugt werden, wobei zwischen dem zweiten Konverter 9 und der Heizschicht 4 der Pulsweitenmodulator 6 zur Variierung der effektiven Heizleistung geschaltet sein kann.

Unterschiedliche Ladezustände der Spannungsquelle 8 können mittels Blinken und/oder unterschiedlichen Farben einer LED-Anzeige 11 angezeigt werden.

Die Heizvorrichtung 3 kann beispielsweise mittels eines Schalters 12 manuell ein- und ausgeschaltet werden. Alternativ oder zusätzlich zur Verwendung des Schalters 12 kann die Heizvorrichtung 3 beispielsweise auch in Abhängigkeit von einem von einem Neigungssensor zur Erfassung einer Neigung der Aufsatzvorrichtung und/oder von einem Näherungssensor zur Detektion, ob sich ein Benutzer in einem festgelegten Abstand vor dem Fenster 2 befindet, und/oder von einem Beschlagsensor erzeugten Signal die Heizvorrichtung 3 aktiviert und/oder zu deaktiviert werden.

Die Heizungssteuerung 5 kann auf die Veränderung von Zustandsgrößen der Umgebung, in welcher die Aufsatzvorrichtung benutzt wird, wie beispielsweise Temperatur oder Luftfeuchtigkeit reagieren. Anders gesagt kann die Heizleistung in Abhängigkeit von Zustandsgrößen einer Benutzungsumgebung geregelt und/oder gesteuert werden. Die Heizleistung kann dabei so eingestellt werden, dass an der Oberfläche des Fensters stets eine Temperatur vorliegt, die größer als die Taupunkttemperatur der die Aufsatzvorrichtung und/oder die fernoptische Vorrichtung umgebenden Atmosphäre, z.B. Luft, ist. Die Erfassung der für eine Regelung der Heizleistung erforderlichen Zustandsgrößen kann hierbei durch mit der Heizungssteuerung 5 verbundenen Sensoren, wie beispielsweise Temperatursensoren oder Feuchtigkeitssensoren erfolgen. Der Temperatursensor kann dabei bereits im Prozessor integriert sein. Wird beispielsweise eine Temperatur über 10°C registriert, so kann auf die Heizung gänzlich verzichtet werden. Es ist auch denkbar, dass beim Betrieb bei einer bestimmten angelegten Spannung der Widerstand der Heizschicht über den dabei fließenden Strom bestimmt wird und aus einem bekannten Zusammenhang zwischen Temperatur und Widerstand der Heizschicht die Temperatur der Heizschicht direkt ermittelt und für die Regelung der Heizleistung verwendet wird.

Es ist aber auch möglich, dass die Heizleistung unabhängig von den Umgebungsbedingungen konstant gehalten wird. In diesem Fall ist die Heizleistung so bemessen, dass sie ein Beschlagen des Fensters 2 bis zu einer vorgegebenen minimalen Referenzaußentemperatur, beispielsweise - 20°C, verhindert.

Die elektrisch leitende Heizschicht 4 kann über ein flexibles Flachband 13 mit mindestens einer Leiterbahn 14 aus einem elektrisch leitfähigem Material mit einer Versorgungsschaltung verbunden sein. Das Flachband 13 kann aber auch aus einem elektrisch leitendem Material, beispielsweise einem elektrisch leitenden Kunststoff, gebildet sein.

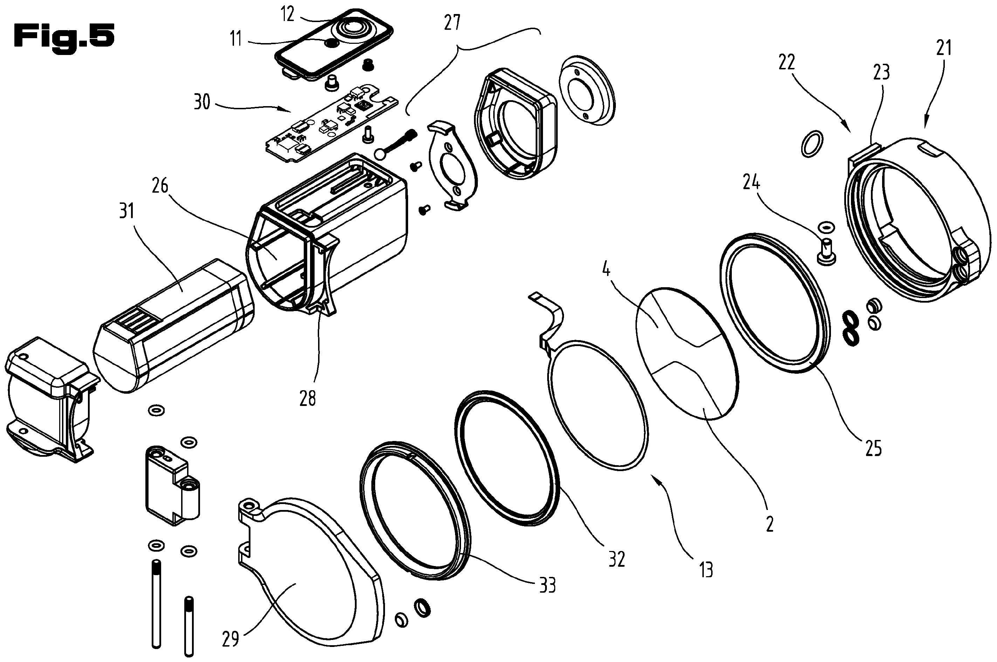

Die Versorgungsschaltung kann im einfachsten Fall im Wesentlichen nur die elektrischen Anschlüsse der Spannungsquelle 8 umfassen. Die Versorgungsschaltung kann aber auch aufwendiger gestaltet sein und mehrere Komponenten umfassen. Gemäß Fig. 1 umfasst die Versorgungsschaltung beispielsweise auch die DC/DC Konverter 9, 10, sowie den Prozessor 7 und den Pulsweitenmodulator 6. In Fig. 5 ist die Versorgungsschaltung mit dem Bezugszeichen 30 bezeichnet.

Wie aus Fig. 2 hervorgeht, kann das flexible Flachband 13 zumindest zwei Kontaktierungsstellen 15, 16 zur elektrischen Kontaktierung der elektrischen Heizschicht 4 aufweisen. Darüber hinaus kann das flexible Flachband 13 einen schleifenförmigen Abschnitt aufweisen 17. Bevorzugt bildet der Abschnitt 17 ein Auge, durch welches ein freier Blick auf einen zentralen Bereich des Fensters 2 ermöglicht ist. Die Kontaktierungsstellen 15, 16 sind an dem Abschnitt 17 voneinander räumlich getrennt und einander gegenüberliegend angeordnet. An den schleifenförmigen Abschnitt 17 des flexiblen Flachbandes 13 schließt ein streifenförmiger Abschnitt 18 an, der elektrisch, beispielsweise über einen "Zero Insertion Force Kontakt" bzw. Nullkraftstecker (ZIF-Kontakt) 19, mit der Versorgungsschaltung 30 verbunden ist.

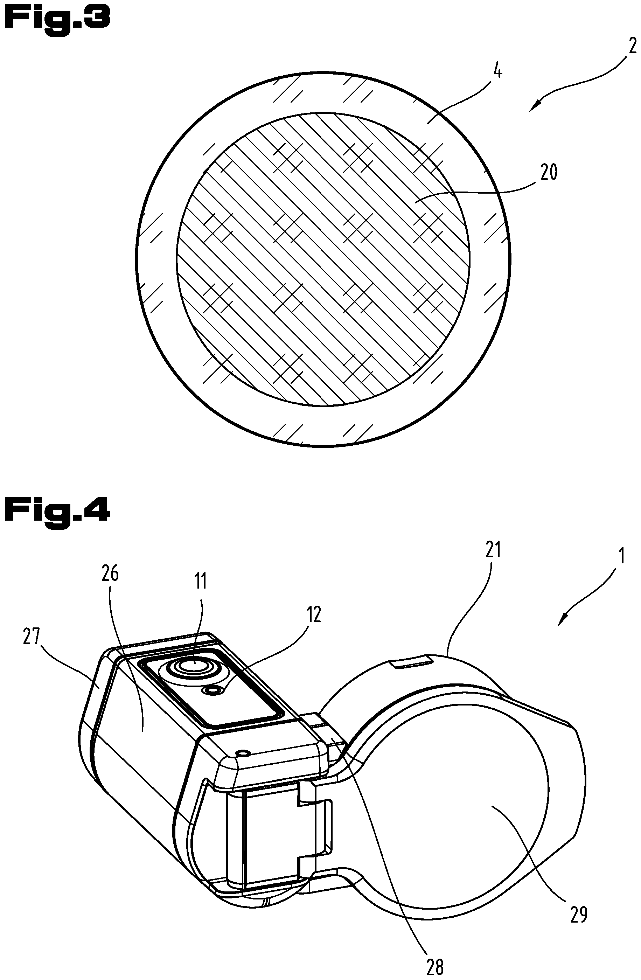

Gemäß Fig. 3 kann das Fenster 2 eine plane Grundfläche und eine plane Deckfläche aufweisen, wobei die Grundfläche und die Deckfläche bevorzugt planparallel zueinander ausgebildet sind. Weiters kann das Fenster 2 eine Antireflexionsbeschichtung 20 aufweisen. Bevorzugt ist das Fenster 2 beidseitig, d.h. auf Grundfläche und Deckfläche, mit der Antireflexionsbeschichtung 20 beschichtet. Auf der Seite des Fensters 2, auf der die Heizschicht 4 aufgebracht ist, bleibt ein Bereich, in dem eine elektrische Kontaktierung der Heizschicht 4 erfolgt, beispielsweise durch die Kontaktierungen 15, 16 des in Fig. 2 dargestellten flexiblen Flachkabels 13, von der Antireflexionsbeschichtung 20 frei, um einen guten elektrischen Kontakt zu gewährleisten. Wie aus Fig. 3 ersichtlich ist, ist die Heizschicht 4 zwischen der Antireflexionsbeschichtung 20 und dem Fenster 2 angeordnet.

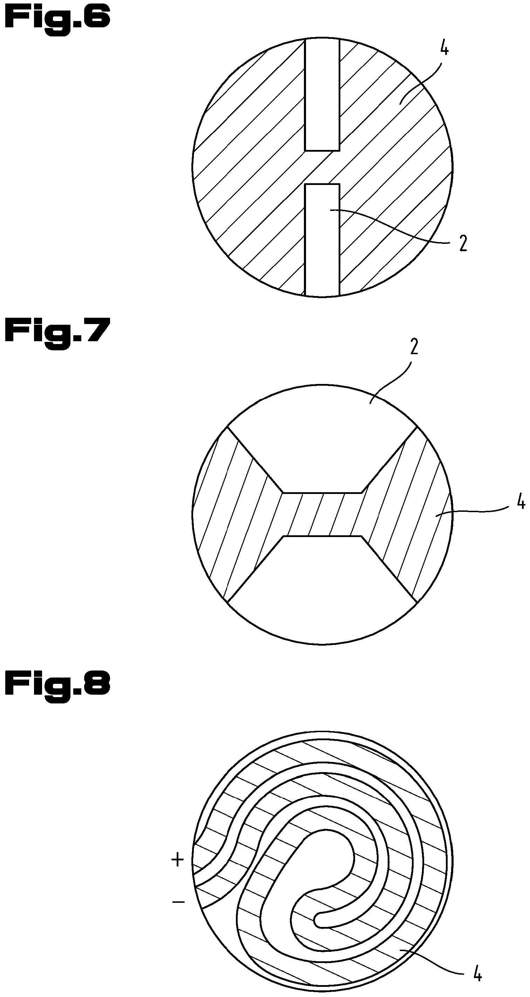

Bei den Fig. 6 - 7 dargestellten Ausführungsbeispielen kann eine Breite der elektrisch leitenden Heizschicht 4 variieren. An den Stellen, an denen die Heizschicht 4 parallel zur Oberfläche des Fensters 2 betrachtet schmäler wird, erhöht sich bei konstanter Schichtdicke der Heizschicht 4 lokal der Widerstand der Heizschicht gegenüber breiteren Bereichen. Die Heizschicht 4 wird an diesen schmäleren Stellen, wenn ein Strom fließt, aufgrund des erhöhten lokalen Widerstandes stärker erwärmt als an Stellen, die im Verhältnis dazu breiter sind. Auch durch eine Veränderung der Schichtdicke lässt sich lokal der Widerstand der Heizschicht 4 verändern bzw. beeinflussen. Hier gilt, dass an einem Ort geringerer Schichtdicke der elektrische Flächenwiderstand und somit die Heizleistung lokal gegenüber Stellen der Heizschicht 4 mit höherer Schichtdicke aber gleicher Breite erhöht wird. Somit lässt sich durch Variation der Breite und/oder der Dicke der Heizschicht 4 die lokale Heizleistung gezielt einstellen.

In Fig. 8 ist eine alternative Ausführungsform der Heizschicht 4 dargestellt. Diese ermöglicht es, die elektrische Kontaktierung von einer Seite des Fensters 2 aus durchzuführen. Ebenfalls kann durch eine lokale Variation der Breite der Heizschichtbahn, beispielsweise in der Mitte des Fensters 2 weniger breit als zum Rand hin, oder durch Änderung der lokalen Flächendichte der Heizleiterbahnen, beispielsweise können in der Mitte des Fensters 2 mehr Bahnen verlaufen als zu Rand des Fensters 2 hin, die lokale Heizleistung in der Mitte des Fensters 2 gegenüber den Rand erhöht werden. Gemäß Fig. 4 weist die Aufsatzvorrichtung 1 ein Gehäuse mit zumindest einem rohrförmig ausgebildeten Abschnitt 21 auf. Das Fenster 2 ist, wie in Fig. 5 dargestellt, in dem rohrförmigen Abschnitt 21 aufgenommen. Ein Durchmesser des Fensters 2 ist bevorzugterweise größer als eine axiale Länge des rohrförmigen Abschnitts 21.

Der rohrförmige Abschnitt 21 kann eine Klemmvorrichtung 22 zur Befestigung an dem zumindest einen Okular oder zumindest einen Objektiv aufweisen. Hierbei kann es sich beispielsweise um einen in seinem Durchmesser veränderbaren Klemmring 23 handeln, dessen Durchmesser mittels einer Schraube 24 verändert werden kann.

Die Aufsatzvorrichtung 1 kann weiters eine Dichtung 25 aufweisen, die einen Rand des Fensters 2 thermisch und/oder gegenüber dem Eindringen von Feuchtigkeit oder Fremdkörpern isoliert. In einem Aufnahmefach 26, in dem sich elektrische Anschlussstellen für die Spannungsquelle 8 befinden, kann als Spannungsquelle 8 ein elektrischer Energiespeicher 31, beispielsweise in Form eines Akkumulators oder einer Batterie vorgesehen sein. Das Aufnahmefach 26 kann aber auch Raum und elektrische Anschlüsse für mehrere Energiespeicher 31 bieten. Das Aufnahmefach 26 kann mit einer Abdeckung 27 verschlossen werden.

Über einen Steg 28 kann das Aufnahmefach 26 mit dem rohrförmigen Abschnitt 21 verbunden sein. Eine Längserstreckung des rohrförmigen Abschnittes 21 und eine Längserstreckung des Aufnahmefaches 26 können parallel zueinander verlaufen.

Mittels einer verschwenkbar gelagerten Abdeckung 29 kann das Fenster 2 vollständig abgedeckt und geschützt werden. Die Abdeckung 29 kann beispielsweise an dem Aufnahmefach 26 gelagert sein und ein Scharniergelenk, insbesondere ein Doppelscharniergelenk, bilden. Alternativ dazu kann die Abdeckung 29 auch direkt an dem rohrförmigen Abschnitt 21 des Gehäuses der Aufsatzvorrichtung gelagert sein. Allgemein gilt, dass die Abdeckung 29 an dem Gehäuse der Aufsatzvorrichtung 1 verschwenkbar gelagert ist. Das Gehäuse der Aufsatzvorrichtung 1 umfasst hierbei sowohl den rohrförmigen Abschnitt 21 als auch den Steg 28 und das Aufnahmefach 26 samt der Abdeckung 27.

Mittels eines Ringes 32 und eines als in den rohrförmigen Abschnitt 21 des Gehäuses einschraubbaren, einschnappbaren und/oder verklebten Halteringes 33 kann das flexible Flachband 13 gegenüber dem Fenster 2 fixiert werden und die Kontaktierungsflächen 15, 16 gegen die Heizschicht 4 gepresst werden. Der Ring 32 übernimmt hier die Funktion einer Beilagscheibe.

Zur Verbesserung der Langzeitstabilität und zur Verminderung von Übergangsverlusten kann die Kontaktierung zwischen den Kontaktierungsflächen 15, 16 und der Heizschicht 4 mittels eines leitfähigem und doppelseitigem Klebebands 39 erfolgen, welches zwischen den Kontaktierungsflächen 15, 16 und der Heizschicht 4 angebracht ist. Weiters kann die Aufsatzvorrichtung 1 dazu eingerichtet sein, bei einem Verschwenken der Abdeckung 29 aus einer das Fenster 2 bedeckenden Position, in eine das Fenster freigebende Position 2, die Heizungsvorrichtung 3 zu aktivieren und das Fenster 2 zu erwärmen und/oder bei einem Schließen der Abdeckung 29 die Heizvorrichtung 3 wieder zu deaktivieren. In diesem Fall kann bei Bewegung der Abdeckung ein Schalter betätig werden und die Heizvorrichtung 3 dadurch ein oder ausgeschaltet werden.

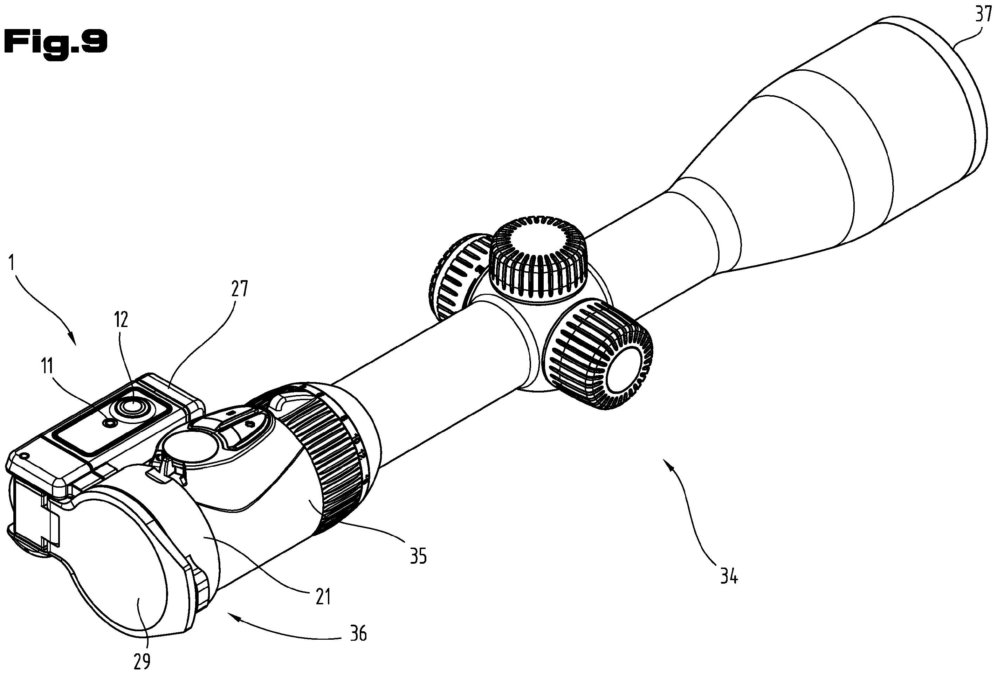

Wie aus Fig. 9 ersichtlich ist, kann die Aufsatzvorrichtung 1 als Aufsteckkappe für eine fernoptische Vorrichtung 34, hier ein Zielfernrohr, ausgebildet sein. Die fernoptische Vorrichtung weist allgemein und ohne jegliche Beschränkung auf einen bestimmten Typ von fernoptischer Vorrichtung zumindest ein Okular und zumindest ein Objektiv auf.

Wie aus Fig. 9 ersichtlich ist, ist die Aufsatzvorrichtung 1 in der vorliegenden Darstellung okularseitig an einem Gehäuse 35 der fernoptischen Vorrichtung 34 angeordnet und deckt das Okular 36 gegenüber der Umgebung vollständig ab. Die Aufsatzvorrichtung 1 kann aber auch auf objektivseitig an dem Gehäuse 35 der fernoptischen Vorrichtung 34 angeordnet sein und das Objektiv 37 vollständig abdecken.

Bei einer okularseitigen Anordnung der Aufsatzvorrichtung 1 an dem Gehäuse 35, wie sie in Fig. 9 dargestellt ist, beträgt ein Abstand zwischen dem Fenster 2 und einem Okular der fernoptischen Vorrichtung 34 bevorzugt max. 10 mm, insbesondere max. 5 mm.

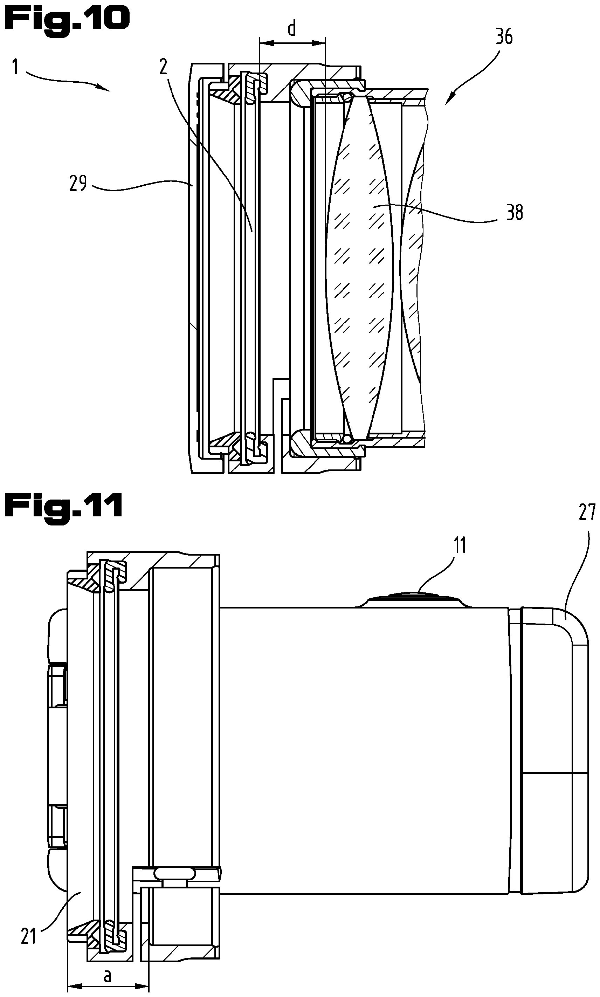

Hierzu kann gemäß Fig. 10 ein Abstand d zwischen einer dem Okular 36 zugewandten Seite des Fensters 2 der Aufsatzvorrichtung 1 und einer dem Fenster zugewandten Außenseite einer das Okular 36 abschließenden Linse 38 der fernoptischen Vorrichtung höchstens 20 mm, insbesondere höchstens 10 mm, betragen.

Insbesondere kann, wie in Fig. 11 gezeigt, eine dem Benutzer zugewandte, äußerste Fläche oder Kante des rohrförmig ausgebildeten Abschnitts 21 der Aufsatzvorrichtung 1 bei der Montage auf dem Okular 36 nicht mehr als 25 mm, insbesondere nicht mehr als 15 mm, über eine äußerste dem Benutzer zugewandte Fläche oder Kante der fernoptischen Vorrichtung hervorstehen. Ein Abstand zwischen der äußersten, dem Benutzer zugewandte Fläche oder Kante der fernoptischen Vorrichtung und der dem Benutzer zugewandte äußerste Fläche oder Kante des rohrförmig ausgebildeten Abschnitts 21 der Aufsatzvorrichtung 1 ist in Fig. 11 mit a bezeichnet. Dadurch kann, wie bereits oben erwähnt, gewährleistet werden, dass bei einer Montage der Aufsatzvorrichtung 1 auf das Okular 36 eines Zielfernrohr der zur Vermeidung von Verletzungen bei einem Rückstoß bei einer Schussabgabe einer Feuerwaffe, auf welcher das Zielfernrohr befestigt ist, notwendige Sicherheitsabstand zwischen dem Kopf des Schützens und dem Zielfernrohr mit der Aufsatzvorrichtung nicht wesentlich verkleinert wird.

**Bezugszeichenaufstellung**

| | | | |
|---|---|---|---|
| | | 30 | Versorgungsschaltung |
| 1 | Aufsatzvorrichtung | 31 | Energiespeicher |
| 2 | Fenster | 32 | Ring |
| 3 | Heizvorrichtung | 33 | Haltering |
| 4 | Heizschicht | 34 | Fernoptische Vorrichtung |
| 5 | Heizungssteuerung | 35 | Gehäuse |
| 6 | Pulsweitenmodulator | 36 | Okular |
| 7 | Prozessor | 37 | Objektiv |
| 8 | Spannungsquelle | 38 | Linse |
| 9 | DC/DC Konverter | 39 | Klebeband |
| 10 | DC/DC Konverter | | |
| 11 | Anzeige | | |
| 12 | Schalter | | |
| 13 | Flachband | | |
| 14 | Leiterbahn | | |
| 15 | Kontaktierungsstelle | | |
| 16 | Kontaktierungsstelle | | |
| 17 | schleifenförmiger Abschnitt | | |
| 18 | streifenförmiger Abschnitt | | |
| 19 | ZIF-Kontakt | | |
| 20 | Antireflexionsbeschichtung | | |
| 21 | rohrförmiger Abschnitt | | |
| 22 | Klemmvorrichtung | | |
| 23 | Klemmring | | |
| 24 | Schraube | | |
| 25 | Dichtung | | |
| 26 | Aufnahmefach | | |
| 27 | Abdeckung | | |
| 28 | Steg | | |
| 29 | Abdeckung | | |

## Patentansprüche

1. Aufsatzvorrichtung (1) für zumindest ein Objektiv und/oder zumindest ein Okular einer fernoptischen Vorrichtung (34), insbesondere in Form eines Zielfernrohrs, eines monokularen oder binokularen Fernrohrs, **dadurch gekennzeichnet, dass** die Aufsatzvorrichtung (1) zumindest ein, zumindest in einem sichtbaren Spektralbereich durchsichtiges Fenster (2) sowie zumindest eine elektrische Heizvorrichtung (3) für das Fenster aufweist.

2. Aufsatzvorrichtung nach Anspruch 1, **dadurch gekennzeichnet, dass** die Heizvorrichtung (3) zumindest eine auf einer Oberfläche des zumindest einen Fensters (2) angebrachte elektrisch leitende Heizschicht (4) aufweist.

3. Aufsatzvorrichtung nach Anspruch 2, **dadurch gekennzeichnet, dass** sie zumindest eine Heizungssteuerung (5) aufweist, die dazu eingerichtet ist, die Heizleistung, insbesondere einen Stromfluss durch die zumindest eine Heizschicht (4) zu steuern.

4. Aufsatzvorrichtung nach Anspruch 3, **dadurch gekennzeichnet, dass** die zumindest eine Heizungssteuerung (5) zumindest einen Prozessor (7) und/oder zumindest einen Pulsweitenmodulator (6) umfasst.

5. Aufsatzvorrichtung nach einem der Ansprüche 2 bis 4, **dadurch gekennzeichnet, dass** das Fenster (2) mit der zumindest einen elektrisch leitenden Heizschicht (4) im sichtbaren Spektralbereich einen Transmissionsgrad von über 80%, insbesondere von über 90%, aufweist.

6. Aufsatzvorrichtung nach einem der Ansprüche 2 bis 5, dass eine Breite und/oder eine Schichtdicke der zumindest einen elektrisch leitenden Heizschicht (4) variiert.

7. Aufsatzvorrichtung nach einem der Ansprüche 2 bis 6, **dadurch gekennzeichnet, dass** die elektrisch leitende Heizschicht (4), insbesondere mit einer konstanten Schichtdicke, auf zumindest einer Oberfläche des Fensters (2) aufgebracht ist und zumindest 20%, insbesondere zumindest 30%, bevorzugt zumindest 60%, besonders bevorzugt zumindest 85 %, beispielsweise 100%, dieser Oberfläche bedeckt.

8. Aufsatzvorrichtung nach einem der Ansprüche 2 bis 7, **dadurch gekennzeichnet, dass** die elektrisch leitende Heizschicht (4) über zumindest ein flexibles Flachband (13) mit zumindest einer Leiterbahn (14) und/oder aus einem elektrisch leitendem Material mit einer Versorgungsschaltung (30) verbunden ist.

9. Aufsatzvorrichtung nach Anspruch 8, **dadurch gekennzeichnet, dass** das flexible Flachband (13) zumindest zwei Kontaktierungsstellen (15, 16) zur elektrischen Kontaktierung der elektrischen Heizschicht (4) aufweist.

10. Aufsatzvorrichtung nach Anspruch 8 oder 9, **dadurch gekennzeichnet, dass** das flexible Flachband (13) einen schleifenförmigen, im Bereich des Fensters (2) ein einen freien Blick zumindest auf einen zentralen Abschnitt des Fensters (2) ermöglichendes Auge bildenden Abschnitt (17) aufweist, wobei die Kontaktierungsstellen (15, 16) an dem schleifenförmigen Abschnitt (17) angeordnet sind.

11. Aufsatzvorrichtung nach Anspruch 10, **dadurch gekennzeichnet, dass** sich an den schleifenförmigen Abschnitt (17) des flexiblen Flachbandes (13) zumindest ein streifenförmiger Abschnitt (18) anschließt, der elektrisch, insbesondere über einen ZIF-Kontakt (19), mit der Versorgungsschaltung (30) verbunden ist.

12. Aufsatzvorrichtung nach einem der Ansprüche 1 bis 11, **dadurch gekennzeichnet, dass** das zumindest eine Fenster (2) eine plane Grundfläche und eine plane Deckfläche aufweist, wobei die Grundfläche und die Deckfläche bevorzugt planparallel zueinander ausgebildet sind.

13. Aufsatzvorrichtung nach einem der Ansprüche 1 bis 12, **dadurch gekennzeichnet, dass** das Fenster (2) zumindest eine Antireflexionsbeschichtung (20) aufweist, wobei das Fenster bevorzugt beidseitig mit der Antireflexionsbeschichtung (20) versehen ist.

14. Aufsatzvorrichtung nach einem der Ansprüche 1 bis 13, **dadurch gekennzeichnet, dass** sie als Aufsteckkappe für das zumindest eine Okular und/oder zumindest eine Objektiv der fernoptischen Vorrichtung ausgebildet ist.

15. Aufsatzvorrichtung nach einem der Ansprüche 1 bis 14, **dadurch gekennzeichnet, dass** sie ein Gehäuse mit zumindest einem rohrförmig ausgebildeten Abschnitt (21) aufweist, wobei das Fenster (2) in dem rohrförmigen Abschnitt (21) aufgenommen ist, wobei ein Durchmesser des Fensters (2) bevorzugterweise größer als eine Länge des rohrförmigen Abschnitts (21) ist.

16. Aufsatzvorrichtung nach Anspruch 15, **dadurch gekennzeichnet, dass** der rohrförmige Abschnitt (21) zumindest eine Klemmvorrichtung (22) zur Befestigung an dem zumindest einen Okular oder zumindest einen Objektiv aufweist.

17. Aufsatzvorrichtung nach einem der Ansprüche 1 bis 16, **dadurch gekennzeichnet, dass** sie zumindest eine zumindest einen Rand des Fensters (2) thermisch und/oder gegenüber dem Eindringen von Feuchtigkeit oder Fremdkörpern isolierende Dichtung (25) aufweist.

18. Aufsatzvorrichtung nach einem der Ansprüche 1 bis 17, **dadurch gekennzeichnet, dass** sie zumindest ein mit zumindest einer Abdeckung (27) verschließbares Aufnahmefach (26) für einen als Spannungsquelle (8) dienenden elektrischen Energiespeicher (31), insbesondere für zumindest eine Batterie oder für zumindest einen Akkumulator, aufweist.

19. Aufsatzvorrichtung nach Anspruch 18, **dadurch gekennzeichnet, dass** das Aufnahmefach (26) für den elektrischen Energiespeicher mit dem rohrförmigen Abschnitt (21), insbesondere über einen Steg (28), verbunden ist.

20. Aufsatzvorrichtung nach Anspruch 19, **dadurch gekennzeichnet, dass** eine Längserstreckung des rohrförmigen Abschnittes (21) und eine Längserstreckung des Aufnahmefaches (26) parallel zueinander verlaufen.

21. Aufsatzvorrichtung nach einem der Ansprüche 1 bis 20, **dadurch gekennzeichnet, dass** sie zumindest eine verschwenkbar gelagerte Abdeckung (29) für das Fenster (2) aufweist.

22. Aufsatzvorrichtung nach Anspruch 21, **dadurch gekennzeichnet, dass** sie dazu eingerichtet ist, bei einem Verschwenken der Abdeckung (29) aus einer das Fenster (2) bedeckenden Position, in eine das Fenster freigebende Position (2), die Heizungsvorrichtung (3) zu aktivieren und das Fenster (2) zu erwärmen und/oder bei einem Schließen der Abdeckung (29) die Heizvorrichtung (3) zu deaktivieren.

23. Aufsatzvorrichtung nach einem der Ansprüche 1 bis 22, **dadurch gekennzeichnet, dass** sie dazu eingerichtet ist, in Abhängigkeit von zumindest einem von zumindest einem Neigungssensors und/oder zumindest einem Näherungssensor und/oder zumindest einem Beschlagsensor erzeugten Signal die Heizvorrichtung (3) zu aktivieren und/oder zu deaktivieren.

24. Aufsatzvorrichtung nach einem der Ansprüche 1 bis 23, **dadurch gekennzeichnet, dass** die elektrisch leitende Heizschicht (4) aus zumindest einem Metall und/oder einem transparenten, elektrisch leitfähigen Oxid, beispielsweise Indiumzinnoxid (ITO), antimondotiertes Zinnoxid (ATO), fluordotiertes Zinnoxid (FTO), aluminiumdotiertes Zinkoxid (AZO) hergestellt ist oder zumindest eines der genannten Materialien umfasst.

25. Aufsatzvorrichtung nach einem der Ansprüche 1 bis 24, **dadurch gekennzeichnet, dass** das Fenster (2) aus zumindest einem Kunststoff und/oder zumindest einem Glas und/oder zumindest einem keramischen und/oder mineralischen und/oder kristallinen Material hergestellt ist oder zumindest eines der genannten Materialien umfasst.

26. Fernoptische Vorrichtung (34), insbesondere in Form eines Zielfernrohrs, eines monokularen oder binokularen Fernrohrs, **dadurch gekennzeichnet, dass** die fernoptische Vorrichtung (34) zumindest eine Aufsatzvorrichtung (1) nach einem der Ansprüche 1 bis 25 aufweist, wobei die Aufsatzvorrichtung (1) okularseitig an einem Gehäuse (35) der fernoptischen Vorrichtung oder objektivseitig an dem Gehäuse (35) der fernoptischen Vorrichtung (34) angeordnet ist und zumindest ein Okular (36) oder zumindest ein Objektiv (37) der fernoptischen Vorrichtung (34) gegenüber einer Umgebung durch die Aufsatzvorrichtung (1) abgedeckt ist.

27. Fernoptische Vorrichtung nach Anspruch 26, **dadurch gekennzeichnet, dass** bei einer okularseitigen Anordnung der Aufsatzvorrichtung (1) an dem Gehäuse (35) der fernoptischen Vorrichtung (34) ein Abstand zwischen dem Fenster (2) und dem Okular (36) der fernoptischen Vorrichtung (34) max. 10 mm, insbesondere max. 5 mm, beträgt.

28. Fernoptische Vorrichtung nach Anspruch 26 oder 27, **dadurch gekennzeichnet, dass** ein Abstand (d) zwischen einer dem Okular (36) zugewandten Seite des Fensters (2) der Aufsatzvorrichtung (1) und einer dem Fenster zugewandten Außenseite einer das Okular (36) abschließenden Linse (38) der fernoptischen Vorrichtung höchstens 20 mm, insbesondere höchstens 10 mm, beträgt.

29. Fernoptische Vorrichtung nach einem der Ansprüche 26 bis 28, **dadurch gekennzeichnet, dass** eine dem Benutzer zugewandte, äußerste Fläche oder Kante des rohrförmig ausgebildeten Abschnitts (21) der Aufsatzvorrichtung (1) bei der Montage auf dem Okular (36) nicht mehr als 25 mm, insbesondere nicht mehr als 15 mm, über eine äußerste dem Benutzer zugewandte Fläche oder Kante der fernoptischen Vorrichtung (34) hervorsteht.

## Claims

1. An attachment device (1) for at least one objective lens and/or at least one eyepiece of a long-range optical device (34), in particular in the form of a riflescope, a telescope or a binocular, **characterized in that** the attachment device (1) comprises at least one window (2), which is transparent at least in a visible spectral range, as well as at least one electrical heating device (3) for the window.

2. The attachment device according to claim 1, **characterized in that** the heating device (3) comprises at least one electrically conductive heating layer (4) applied to a surface of the at least one window (2).

3. The attachment device according to claim 2, **characterized in that** it comprises at least one heating controller (5) which is configured to control the heating power, in particular a flow of current through the at least one heating layer (4).

4. The attachment device according to claim 3, **characterized in that** the at least one heating controller (5) comprises at least one processor (7) and/or at least one pulse width modulator (6).

5. The attachment device according to one of claims 2 to 4, **characterized in that** the window (2) with the at least one electrically conductive heating layer (4) has a transmittance of more than 80%, in particular of more than 90%, in the visible spectral range.

6. The attachment device according to one of claims 2 to 5, **characterized in that** a width and/or a layer thickness of the at least one electrically conductive heating layer (4) varies.

7. The attachment device according to one of claims 2 to 6, **characterized in that** the electrically conductive heating layer (4), in particular with a constant layer thickness, is applied to at least one surface of the window (2), and covers at least 20%, in particular at least 30%, preferably at least 60%, particularly preferred at least 85 %, for example 100%, of this surface.

8. The attachment device according to one of claims 2 to 7, **characterized in that** the electrically conductive heating layer (4) is connected to a supply circuit (30) via at least one flexible flat strip (13) with at least one conducting path (14) and/or made of an electrically conductive material.

9. The attachment device according to claim 8, **characterized in that** the flexible flat strip (13) comprises at least two contact points (15, 16) for electrically contacting the electrical heating layer (4).

10. The attachment device according to claim 8 or 9, **characterized in that** the flexible flat strip (13) comprises a loop-shaped section (17) forming an eye in the region of the window (2) allowing a free view at least on a central section of the window (2), wherein the contacting points (15, 16) are arranged on the loop-shaped section (17).

11. The attachment device according to claim 10, **characterized in that** at least one strip-shaped section (18), which is electrically connected, in particular via a ZIF contact (19), to the supply circuit (30), adjoins the loop-shaped section (17) of the flexible flat strip (13).

12. The attachment device according to one of claims 1 to 11, **characterized in that** the at least one window (2) may comprise a planar base surface and a planar top surface, wherein the base surface and the top surface are preferably embodied being plane parallel to one another.

13. The attachment device according to one of claims 1 to 12, **characterized in that** the window (2) comprises at least one anti-reflective coating (20), wherein the window is preferably provided with the anti-reflective coating (20) on both sides.

14. The attachment device according to one of claims 1 to 13, **characterized in that** it is embodied as a push-on lid for the at least one eyepiece and/or at least one objective lens of the long-range optical device.

15. The attachment device according to one of claims 1 to 14, **characterized in that** it comprises a housing with at least one tube-shaped section (21), wherein the window (2) is received in the tube-shaped section (21), wherein a diameter of the window (2) is preferably larger than a length of the tub-shaped section (21).

16. The attachment device according to claim 15, **characterized in that** the tube-shaped section (21) comprises at least one clamping device (22) for fastening to the at least one eyepiece or at least one objective lens.

17. The attachment device according to one of claims 1 to 16, **characterized in that** it comprises at least one seal (25) insulating at least one edge of the window (2) thermally and/or against the ingress of moisture or foreign objects.

18. The attachment device according to one of claims 1 to 17, **characterized in that** it comprises at least one receiving compartment (26), which can be closed by at least one cover (27), for an electrical energy storage (31) serving as a voltage source (8), in particular for at least one battery or for at least one accumulator.

19. The attachment device according to claim 18, **characterized in that** the receiving compartment (26) for the electrical energy storage is connected, in particular via a web (28), with the tube-shaped section (21).

20. The attachment device according to claim 19, **characterized in that** a longitudinal extension of the tube-shaped section (21) and a longitudinal extension of the receiving compartment (26) extend in parallel to one another.

21. The attachment device according to one of claims 1 to 20, **characterized in that** it comprises at least one pivotably mounted cover (29) for the window (2).

22. The attachment device according to claim 21, **characterized in that** it is configured to activate the heating device (3) and heat the window (2) when the cover (29) is pivoted from a position covering the window (2) into a position releasing the window (2) and/or to deactivate the heating device (3) when the cover (29) is closed.

23. The attachment device according to one of claims 1 to 22, **characterized in that** it is configured to activate and/or deactivate the heating device (3) depending on at least one signal generated by at least one inclinometer and/or at least one proximity sensor and/or at least one fogging sensor.

24. The attachment device according to one of claims 1 to 23, **characterized in that** the electrically conductive heating layer (4) is made of at least one metal and/or at least one transparent, electrically conductive oxide, for example indium tin oxide (ITO), antimony doped tin oxide (ATO), fluorine doped tin oxide (FTO), aluminum doped zinc oxide (AZO) or comprises at least one of said materials.

25. The attachment device according to one of claims 1 to 24, **characterized in that** the window (2) is made of at least one plastic material and/or at least one glass and/or at least one ceramic and/or mineral and/or crystalline material, or comprises at least one of said materials.

26. A long-range optical device (34), in particular in the form of a riflescope, a telescope or a binocular, **characterized in that** the long-range optical device (34) comprises at least one attachment device (1) according to one of claims 1 to 25, wherein the attachment device (1) is arranged on the eyepiece side of a housing (35) of the long-range optical device or on the objective side of the housing (35) of the long-range optical device (34) and at least one eyepiece (36) or at least one objective lens (37) of the long-range optical device (34) is covered from a surrounding by the attachment device (1).

27. The long-range optical device according to claim 26, **characterized in that** in an eyepiece-side arrangement of the attachment device (1) on the housing (35) of the long-range optical device (34), a distance between the window (2) and the eyepiece (36) of the long-range optical device (34) amounts to a maximum of 10 mm, in particular to a maximum of 5 mm.

28. The long-range optical device according to claim 26 or 27, **characterized in that** a distance (d) between an eyepiece (36) facing side of the window (2) of the attachment device (1) and a window facing outer side of an eyepiece (36) closing lens (38) of the long-range optical device can amount to a maximum of 20 mm, in particular to a maximum of 10 mm.

29. The long-range optical device according to one of claims 26 to 28, **characterized in that** an outermost user facing surface or edge of the tube-shaped section (21) of the attachment device (1) when mounted on the eyepiece (36) projects by no more than 25 mm, in particular by no more than 15 mm, over an outermost user facing surface or edge of the long-range optical device (34).

## Revendications

1. Dispositif de fixation (1) pour au moins un objectif et/ou au moins un oculaire d'un dispositif téléoptique (34), plus particulièrement sous la forme d'une lunette de visée, d'une lunette monoculaire ou binoculaire, **caractérisé en ce que** le dispositif de fixation (1) comprend au moins une fenêtre (2) transparente au moins dans le spectre visible, ainsi qu'au moins un dispositif de chauffage électrique (3) pour la fenêtre.

2. Dispositif de fixation selon la revendication 1, **caractérisé en ce que** le dispositif de chauffage (3) comprend au moins une couche chauffante électro-conductrice (4) appliquée sur une surface de l'au moins une fenêtre (2).

3. Dispositif de fixation selon la revendication 2, **caractérisé en ce qu'**il comprend au moins une commande de chauffage (5) qui est conçue pour contrôler la puissance de chauffage, plus particulièrement un courant à travers l'au moins une couche chauffante (4).

4. Dispositif de fixation selon la revendication 3, **caractérisé en ce que** l'au moins une commande de chauffage (5) comprend au moins un processeur (7) et/ou au moins un modulateur de largeur d'impulsions (6).

5. Dispositif de fixation selon l'une des revendications 2 à 4, **caractérisé en ce que** la fenêtre (2) avec l'au moins une couche chauffante électro-conductrice (4) présente, dans le spectre visible, un degré de transmission supérieur à 80 %, plus particulièrement supérieur à 90 %.

6. Dispositif de fixation selon l'une des revendications 2 à 5, **caractérisé en ce qu'**une largeur et/ou une épaisseur de couche de l'au moins une couche chauffante électro-conductrice (4) est variable.

7. Dispositif de fixation selon l'une des revendications 2 à 6, **caractérisé en ce que** la couche chauffante électro-conductrice (4) est appliquée, plus particulièrement avec une épaisseur de couche constante, sur au moins une surface de la fenêtre (2) et recouvre au moins 20 %, plus particulièrement au moins 30 %, de préférence au moins 60 %, plus particulièrement de préférence au moins 85 %, par exemple 100 % de cette surface.

8. Dispositif de fixation selon l'une des revendications 2 à 7, **caractérisé en ce que** la couche chauffante électro-conductrice (4) est reliée, par l'intermédiaire d'au moins une bande plate flexible (13) avec au moins une piste conductrice (14) et/ou constituée matériau électro-conducteur, avec un circuit d'alimentation (30).

9. Dispositif de fixation selon la revendication 8, **caractérisé en ce que** la bande plate flexible (13) présente au moins deux points de contact (15, 16) pour le branchement électrique de la couche chauffante électrique (4).

10. Dispositif de fixation selon la revendication 8 ou 9, **caractérisé en ce que** la bande plate flexible (13) présente une portion (17) en forme de boucle, au niveau de la fenêtre (2), formant un oeil permettant une vision libre sur au moins une portion centrale de la fenêtre (2), dans lequel les points de contact (15, 16) sont disposés sur la portion en forme de boucle (17).

11. Dispositif de fixation selon la revendication 10, **caractérisé en ce qu'**au moins une portion en forme de bande (18) se raccorde à la portion en forme de boucle (17) de la bande plate flexible (13), qui est reliée électriquement, plus particulièrement par l'intermédiaire d'un contact ZIF (19), avec le circuit d'alimentation (30).

12. Dispositif de fixation selon l'une des revendications 1 à 11, **caractérisé en ce que** l'au moins une fenêtre (2) présente une surface de base plane et une surface de recouvrement plane, dans lequel la surface de base et la surface de recouvrement sont réalisées de préférence de manière parallèle entre elles.

13. Dispositif de fixation selon l'une des revendications 1 à 12, **caractérisé en ce que** la fenêtre (2) comprend au moins un revêtement anti-reflet (20), dans lequel la fenêtre est munie, de préférence des deux côtés, du revêtement anti-reflet (20).

14. Dispositif de fixation selon l'une des revendications 1 à 13, **caractérisé en ce qu'**il est conçu comme un capuchon de montage pour l' au moins un oculaire et/ou l' au moins un objectif du dispositif téléoptique.

15. Dispositif de fixation selon l'une des revendications 1 à 14, **caractérisé en ce qu'**il comprend un boîtier avec au moins une portion tubulaire (21), dans lequel la fenêtre (2) est logée dans la portion tubulaire (21), dans lequel un diamètre de la fenêtre (2) est de préférence plus grand qu'une longueur de la portion tubulaire (21).

16. Dispositif de fixation selon la revendication 15, **caractérisé en ce que** la portion tubulaire (21) comprend au moins un dispositif de serrage (22) pour la fixation sur l'au moins un oculaire ou l'au moins un objectif.

17. Dispositif de fixation selon l'une des revendications 1 à 16, **caractérisé en ce qu'**il comprend au moins un joint d'étanchéité (25) isolant, thermiquement et/ou contre la pénétration d'humidité ou de corps étrangers, au moins un bord de la fenêtre (2).

18. Dispositif de fixation selon l'une des revendications 1 à 17, **caractérisé en ce qu'**il comprend au moins un compartiment de logement (26) pouvant être obturé avec au moins un couvercle (27), pour un accumulateur d'énergie électrique (31) servant de source de tension (8), plus particulièrement pour au moins une batterie ou pour au moins un accumulateur.

19. Dispositif de fixation selon la revendication 18, **caractérisé en ce que** le compartiment de logement (26) pour l'accumulateur d'énergie électrique est relié avec la portion tubulaire (21), plus particulièrement par l'intermédiaire d'une nervure (28).

20. Dispositif de fixation selon la revendication 19, **caractérisé en ce qu'**une extension longitudinale de la portion tubulaire (21) et une extension longitudinale du compartiment de logement (26) sont parallèles entre elles.

21. Dispositif de fixation selon l'une des revendications 1 à 20, **caractérisé en ce qu'**il comprend au moins un couvercle (29), logé de manière pivotante, pour la fenêtre (2).

22. Dispositif de fixation selon la revendication 21, **caractérisé en ce qu'**il est conçu pour activer le dispositif de chauffage (3) et pour chauffer la fenêtre (2) lors d'un pivotement du couvercle (29) d'une position recouvrant la fenêtre (2) vers une position (2) libérant la fenêtre, et/ou pour désactiver le dispositif de chauffage (3) lors de la fermeture du couvercle (29).

23. Dispositif de fixation selon l'une des revendications 1 à 22, **caractérisé en ce qu'**il est conçu pour activer et/ou désactiver le dispositif de chauffage (3) en fonction d'au moins un signal généré par au moins un élément parmi au moins un capteur d'inclinaison et/ou au moins un capteur de proximité et/ou au moins un capteur de buée.

24. Dispositif de fixation selon l'une des revendications 1 à 23, **caractérisé en ce que** la couche chauffante électro-conductrice (4) est constituée d'au moins un métal et/ou d'un oxyde électro-conducteur transparent, par exemple : oxyde d'indium-étain (ITO), oxyde d'étain dopé à l'antimoine (ATO), oxyde d'étain dopé au fluor (FTO), oxyde de zinc dopé à l'aluminium (AZO) ou comprend au moins un des matériaux mentionnés.

25. Dispositif de fixation selon l'une des revendications 1 à 24, **caractérisé en ce que** la fenêtre (2) est constituée d'au moins une matière plastique et/ou d'au moins un verre et/ou d'au moins un matériau céramique et/ou minéral et/ou cristallin ou comprend au moins un des matériaux mentionnés.

26. Dispositif téléoptique (34), plus particulièrement sous la forme d'une lunette de visée, d'une lunette monoculaire ou binoculaire, **caractérisé en ce que** le dispositif téléoptique (34) comprend au moins un dispositif de fixation (1) selon l'une des revendications 1 à 25, dans lequel le dispositif de fixation (1) est disposé côté oculaire sur un boîtier (35) du dispositif téléoptique ou côté objectif sur le boîtier (35) du dispositif téléoptique (34) et au moins un oculaire (36) ou au moins un objectif (37) du dispositif téléoptique (34) est protégé contre un environnement par le dispositif de fixation (1).

27. Dispositif téléoptique selon la revendication 26, **caractérisé en ce que**, lors d'une disposition côté oculaire du dispositif de fixation (1) sur le boîtier (35) du dispositif téléoptique (34), une distance entre la fenêtre (2) et l'oculaire (36) du dispositif téléoptique (34) est de 10 mm maximum, plus particulièrement de 5 mm maximum.

28. Dispositif téléoptique selon la revendication 26 ou 27, **caractérisé en ce qu'**une distance (d) entre un côté de la fenêtre (2) du dispositif de fixation (1), orienté vers l'oculaire (36), et un côté externe d'une lentille (38) terminant l'oculaire (36), du dispositif téléoptique, orienté vers la fenêtre, est de 20 mm maximum, plus particulièrement de 10 mm maximum.

29. Dispositif téléoptique selon l'une des revendications 26 à 28, **caractérisé en ce qu'**une surface ou arête externe de la portion tubulaire (21) du dispositif de fixation (1), orientée vers l'utilisateur, dépasse, lors du montage sur l'oculaire (36), de pas plus de 25 mm, de préférence pas plus de 15 mm, d'une surface ou arête externe du dispositif téléoptique (34), orientée vers l'utilisateur.
